Europäisches Patentamt

European Patent Office

Office européen des brevets

(19)

(11) Numéro de publication: **0 099 768**

**A1**

(12) # DEMANDE DE BREVET EUROPEEN

(21) Numéro de dépôt: **83401142.1**

(22) Date de dépôt: **03.06.83**

(51) Int. Cl.³: **H 02 M 3/335**

(30) Priorité: **11.06.82 FR 8210242**

(43) Date de publication de la demande:
**01.02.84 Bulletin 84/5**

(84) Etats contractants désignés:
**DE GB IT NL SE**

(71) Demandeur: THOMSON-CSF
173, Boulevard Haussmann
F-75379 Paris Cedex 08(FR)

(72) Inventeur: Guillemin, Germain
THOMSON-CSF SCPI 173, bld Haussmann
F-75379 Paris Cedex 08(FR)

(74) Mandataire: Desperrier, Jean-Louis et al,
THOMSON-CSF SCPI 173, Bld Haussmann
F-75379 Paris Cedex 08(FR)

(54) **Convertisseur de tension à régime de travail constant.**

(57) Convertisseur de tension continu-continu du type demi-pont à grande sécurité de fonctionnement dans lequel la tension d'entrée E est appliquée à deux transistors ($T_1$, $T_2$) commutés alternativement. Le primaire du transformateur de sortie comporte deux enroulements ($P_1$,$P_2$) leur point commun étant connecté par une inductance $L_1$ et un condensateur $C_1$ au point commun des deux transistors, tandis que l'autre extrêmité de l'enroulement $P_2$ est relié au point milieu de 2 diodes placées en parallèle sur la tension d'entrée. On obtient une simplification des circuits d'aide à la commutation, sans éléments dissipatifs, et un courant constant dans les transistors en fonction de la charge de sortie.

Application à la réalisation d'alimentation à grande sécurité de fonctionnement.

FIG.3

Croydon Printing Company Ltd

EP 0 099 768 A1

0099768

CONVERTISSEUR DE TENSION A REGIME DE TRAVAIL CONSTANT.

L'objet de la présente invention est un convertisseur de tension continu-continu à grande sécurité de fonctionnement réalisé avec une grande simplicité de mise en oeuvre.

Il est connu notamment par l'article de J.P. Arches, H. Foch et B. Escaut paru dans "Electronique et Applications Industrielles " volume 246, (1978) p.13, de réaliser un convertisseur continu-continu recevant à son entrée une tension pouvant atteindre 1000 Volts. Pour ce montage ayant une structure appelée demi-pont ou push-pull série, la commutation se fait par des transistors, qui ne supportent grâce à un point milieu créé par des condensateurs au moment de leur amorçage, que la demi-tension de l'alimentation. Des circuits passifs auxiliaires doivent être prévus pour aider à la commutation des transistors, dont le rôle est d'une part la réduction des pertes par commutation et d'autre part la limitation de la vitesse de montée de la tension, pour que celle-ci soit inférieure à la tension $V_{CEO}$ (collecteur-émetteur, base ouverte), lorsque le courant collecteur s'annule. Un tel convertisseur, suivant l'Art Antérieur, présente l'inconvénient d'être sensible aux régimes transitoires dus aux variations de charge surtout au niveau du courant dans les transistors. En effet, ce montage comporte un transformateur dont le primaire est affecté par les variations de courant dues aux variations de charge et qui est relié directement aux transistors par la connexion au point milieu. Ainsi, la sécurité du convertisseur n'est pas absolue. Un autre inconvénient provient de la complexité des circuits d'aide à la commutation.

Le convertisseur suivant l'invention remédie à ces inconvénients grâce à un fonctionnement des transistors indépendamment des variations de la charge de sortie et par une simplification des circuits d'aide à la commutation par rapport à l'Art Antérieur.

Brièvement c'est un convertisseur de tension électrique continu-continu du type demi-pont où la tension d'entrée E est appliquée à deux condensateurs en série, la commutation se faisant alternativement et séquentiellement par des transistors ($T_1$, $T_2$), un courant circulant alternativement dans le primaire d'un transformateur dont la secondaire après redressement et filtrage fournit une tension aux bornes d'une charge, le convertisseur comportant des circuits d'aide à la commutation caractérisé par le fait que le primaire du transformateur est constitué de deux enroulements ($P_1$, $P_2$) connectés par leur extrémité commune aux transistors par intermédiaire d'une inductance $L_1$ en série avec un condensateur $C_1$ le point de connexion étant l'émetteur de l'un et le collecteur de l'autre et que l'autre extrémité du premier enroulement du primaire est relié au point d'entrée de tension E/2 et que l'autre extrémité du deuxième enroulement est relié à une deuxième inductance $L_2$ dont l'extrémité est reliée à la masse et au point d'entrée à la tension E par deux diodes et que la fréquence d'accord correspondant au circuit formé par l'inductance $L_1$ et le condensateur $C_1$ est inférieure à la fréquence de commutation des transistors, et que la valeur de l'inductance $L_2$ a une valeur sensiblement égale à l'inductance de fuite de l'enroulement $P_1$ du transformateur.

D'autres caractéristiques et avantages ressortiront de la description qui va suivre, illustrés par les figures qui représentent :

- Figure 1, le schéma de principe d'un convertisseur continu-continu demi-pont ou push-pull série;

- Figure 2, le schéma d'un convertisseur demi-pont, suivant l'art antérieur ;

- Figure 3 et figure 4, des schémas de convertisseurs, suivant l'invention ;

- Figure 5, quelques signaux temporels pour expliquer le fonctionnemnt du convertisseur, suivant l'invention.

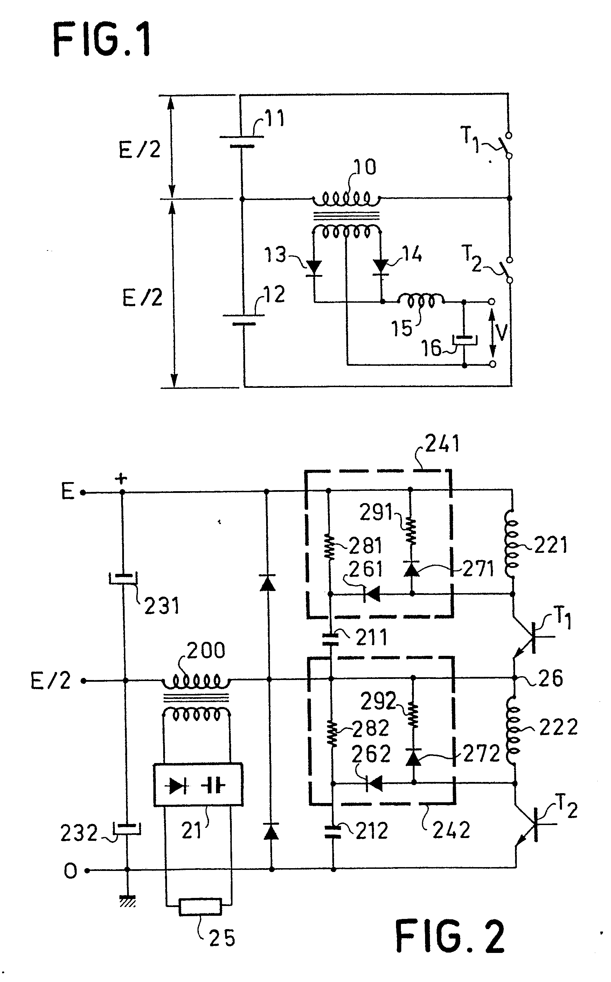

Le principe général d'un convertisseur continu-continu est montré par la figure 1. Le primaire d'un transformateur 10 a ses deux extrémités reliées d'une part à deux sources de tension continue E/2, 11 et 12 et d'autre part à deux interrupteurs $T_1$ et $T_2$. Les interrupteurs $T_1$ et $T_2$ sont fermés alternativement et périodiquement de manière à obtenir aux bornes du primaire un signal en créneaux alternatifs d'amplitude E/2. Après redressement à deux alternances par les diodes 13 et 14 et filtrage par l'inductance 15, on obtient aux bornes du condensateur 16 la tension continue de sortie V, dont la valeur dépend du rapport de transformation du transformateur 10.

Les interrupteurs $T_1$ et $T_2$ sont généralement des transistors ou des thyristors de puissance choisis pour supporter les tensions de fonctionnement. Les transistors sont rendus alternativement conducteurs et ils fonctionnent en régime de commutation. Lorsqu'un transistor est rendu conducteur, sa tension aux bornes devient nulle et le courant augmente ; réciproquement, lorsqu'un transistor est bloqué, sa tension aux bornes augmente, tandis que le courant devient nul. Afin que la puissance qu'il dissipe reste limitée et pour éviter que le transistor soit endommagé, il est connu d'utiliser des circuits passifs auxiliaires "d'aide à la commutation".

La figure 2 représente un convertisseur selon l'art antérieur. Au secondaire du transformateur 200, on a schématisé par la boîte 21 le pont de diodes et le réseau de filtres. Les circuits d'aide à la commutation sont constitués pour le transistor $T_1$ par l'inductance 221 et un circuit 241 comprenant des diodes 261 et 271 et les résistances 281 et 291, ainsi qu'un condensateur 211. De même sont montés pour l'aide à la commutation du transistor $T_2$, l'inductance 222, le circuit 242 comprenant des diodes 262 et 272 et les résistances 282 et 292 et le condensateur 212. Ces circuits ont un double rôle : réduction des pertes par commutation et limitation de la vitesse de montée de la tension aux bornes des transistors au moment du blocage. Les condensateurs 231 et 232 permettent de diviser la tension d'alimentation par 2 et sont prévus pour supporter la demi-tension E/2.

Un tel convertisseur présente l'inconvénient d'être sensible aux régimes transitoires dus aux variations de la charge 25 surtout au niveau du courant dans les transistors. En effet, le primaire du transformateur, qui voit les variations de courant dues aux variations de charge, est relié directement aux transistors par la connexion du point milieu 26. Ainsi, la sécurité du convertisseur n'est pas absolue. Un autre inconvénient provient de la complexité évidente des circuits d'aide à la commutation et du fait que ces circuits comportent des éléments dissipatifs.

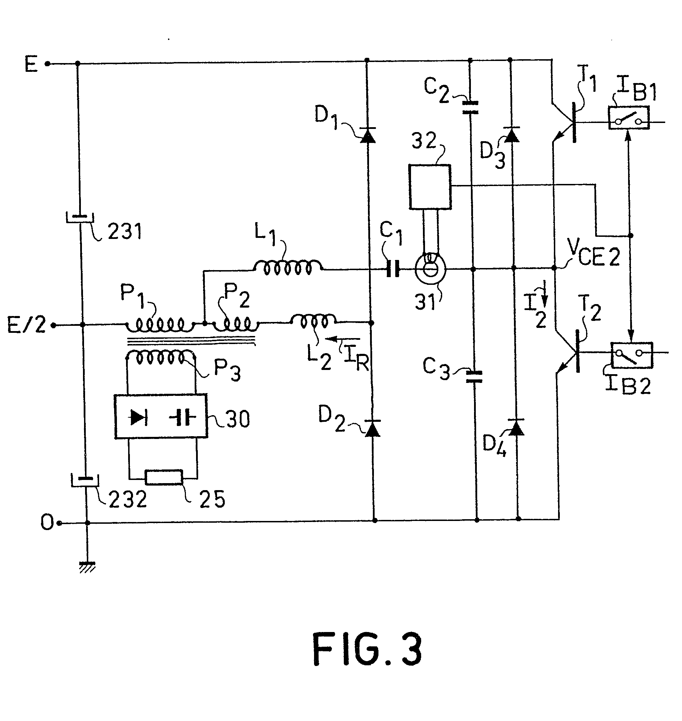

La figure 3 représente un exemple de réalisation du convertisseur continu-continu suivant l'invention.

Le primaire du transformateur est formé de deux enroulements $P_1$ et $P_2$, le deuxième enroulement $P_2$ ayant un nombre de spires de l'ordre de 10% du nombre de spires de $P_1$. Les transistors sont reliés au primaire du

4

transformateur par un circuit formé d'une inductance $L_1$ et d'un condensateur $C_1$. Le point de connexion est situé à l'extrémité commune de $P_1$ et $P_2$, tandis que l'enroulement $P_2$ est connecté à son autre extrémité à deux diodes $D_1$, $D_2$ par l'intermédiaire d'une inductance $L_2$. Une diode $D_3$ et un condensateur $C_2$ sont placés aux bornes du transistor $T_1$ de même qu'une diode $D_4$ et un condensateur $C_3$ sont placés aux bornes du transistor $T_2$. Le circuit $L_1$, $C_1$ est accordé sur une fréquence inférieure à la fréquence de commutation des transistors. Les transistors $T_1$, $T_2$ sont alternativement saturés et bloqués par les courants de base $I_{B1}$ et $I_{B2}$.

On expliquera dans la suite le fonctionnement du convertisseur à la fermeture de $T_2$, pendant la conduction de $T_2$, et à l'ouverture de $T_2$ étant entendu que le fonctionnement est semblable pour $T_1$.

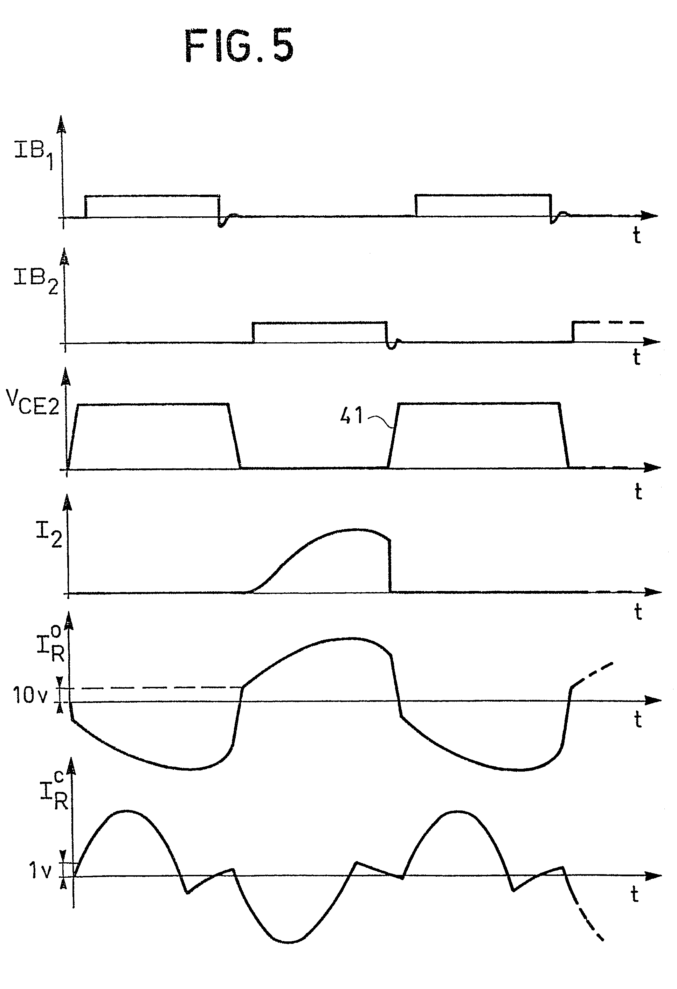

La figure 5 montre les signaux temporels correspondants : aux courants des bases $I_{B1}$ et $I_{B2}$, à la tension collecteur-émetteur $V_{CE2}$ du transistor $T_2$, au courant collecteur-émetteur $I_2$, au courant $I_R$ traversant l'enroulement $P_2$ et l'inductance $L_2$ à vide $I_R^O$ et en charge $I_R^C$.

Dès la fermeture de $T_2$, la tension $V_{CE2}$ aux bornes de $T_2$ s'annule alors que que le courant $I_2$ est encore très faible. En effet, la diode $D_4$ conduit pour restituer à l'alimentation le résiduel d'énergie emmagasinée par $L_1$ pendant la conduction de $T_1$. Le courant dans $D_4$ s'annule et un courant $I_2$, dû à la tension E/2 appliquée, apparaît dans le circuit formé par $T_2$-$D_2$-$L_2$-$P_2$-$L_1$-$C_1$. Ce courant a la forme d'une portion de sinusoïde et son amplitude est liée aux caractéristiques d'impédance du circuit $L_1$ - $C_1$.

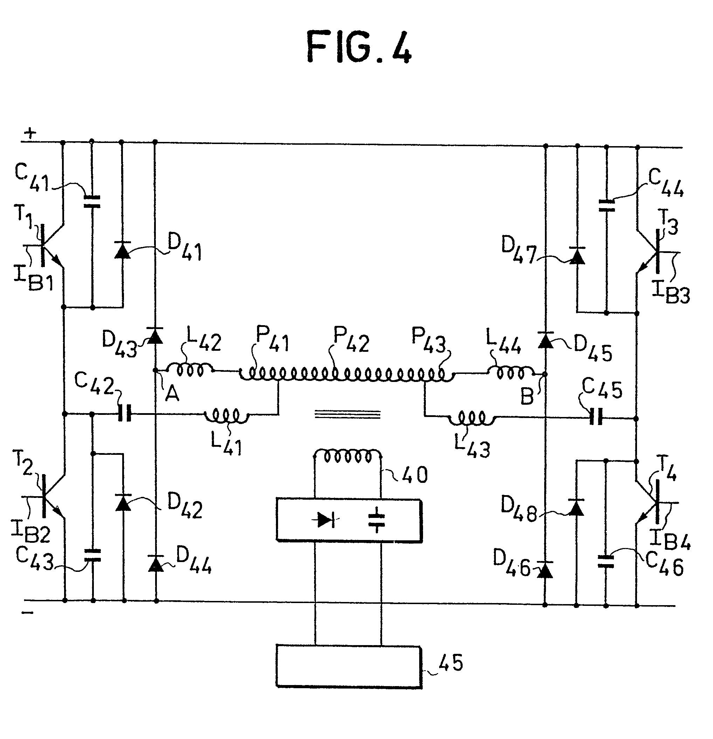

La tension V aux bornes de l'enroulement $P_2$ reste fixe et elle est égale à environ $\dfrac{E\,N_2}{2(N_1 + N_2)}$, où $N_1$ et $N_2$ sont respectivement les

nombres de spires des enroulements $P_1$ et $P_2$. Ainsi, l'enroulement $P_2$ du transformateur est un générateur de tension V fixe, quelque soit le courant qui le traverse donc quelle que soit la charge de sortie. Ce générateur contribue à maintenir le courant $I_2$ et le courant dans $L_1$ - $C_1$, qui lui est égal, constants que le convertisseur soit en charge ou à vide. En revanche, le courant $I_R$ dans les diodes $D_1$ et $D_2$ varie avec la charge comme indiqué par les signaux temporels de la figure 4 ; il diminue quand la charge augmente et réciproquement. Ainsi, le courant $I_R$ constitue un courant qui récupère les variations de courant dues aux variations de charge et contribue à maintenir constant le courant dans les transistors.

L'inductance $L_2$ est de faible valeur et permet un léger abaissement du courant dans $L_1 - C_1$ dans le cas du fonctionnement à vide. Son rôle est d'équilibrer les inductances de fuite de $P_1$ et $P_2$ (c'est une inductance de fuite volontairement rajoutée à celle de $P_2$). Quand le courant de récupération $I_R$ diminue, cette inductance perd son importance.

A l'ouverture de $T_2$, le courant circulant dans le transistor est absorbé par les condensateurs $C_2$, $C_3$ de sorte qu'au circuit $L_1 - C_1$ viennent s'ajouter en série les condensateurs $C_2$ et $C_3$ en parallèle, ce qui a pour conséquence d'augmenter de façon très sensible la fréquence de résonance de ce circuit (environ 60 kHz) et de permettre à l'inductance $L_1$ de se décharger beaucoup plus rapidement. Ainsi, le courant $I_2$ diminue rapidement tandis que la montée de la tension $V_{CE2}$ est ralentie par les condensateurs $C_2$ et $C_3$ électriquement en parallèle, comme le montre la pente 41 de la figure 4. L'avantage obtenu est une simplification des circuits d'aide à la commutation qui ne comportent plus, en particulier, d'éléments dissipatifs. L'énergie est restituée au réseau au lieu d'être dissipée.

Avantageusement, la commande de base des transistors est réalisée par l'intermédiaire de 2 transformateurs procurant, avec le transformateur de puissance, un isolement galvanique.

Le redressement au secondaire est effectué par un pont de diodes 30 et le filtrage est réalisé par condensateur en tête, mais en réalité tout se passe comme si l'inductance équivalente du circuit $L_1 - C_1$, à la fréquence considérée, se trouvait placée en série (au rapport de transformation près) dans le circuit de sortie. Il en résulte que les variations de la tension de sortie sont en réalité celles d'un filtre à inducteur en tête, ce qui est avantageux pour la stabilité de la valeur de cette tension en fonction des variations de la charge.

Un autre avantage de cette disposition se trouve dans le fait que, suivant l'art antérieur, l'inducteur en tête dans le circuit de filtrage, alimenté en courant redressé, présente l'inconvénient de provoquer une surtension sur la tension de sortie lors de la coupure de la charge, alors que dans la présente invention cette inductance reste du côté alternatif et se trouve de ce fait déchargée à chaque alternance et ne peut donc provoquer une telle surtension.

Suivant un exemple de réalisation, ce convertisseur comporte un dispositif de sécurité qui coupe l'excitation de base des transistors $T_1$ et $T_2$. Un transformateur d'intensité tel qu'un tore magnétique 31 est placé de manière à fournir une tension proportionnelle au courant passant dans $L_1$ - $C_1$. Cette tension est redressée mais non filtrée pour conserver un fonctionnement instantané et comparée dans un circuit de comparaison 32 à une tension de seuil fixe. Un dépassement de ce seuil fournit un signal de commande coupant l'excitation des transistors $T_1$ et $T_2$ et/ou l'alimentation de la tension E. En fonctionnement normal, le courant passant dans $L_1$ - $C_1$ ayant une amplitude rigoureusement constante, cette sécurité est très bonne.

On a réalisé un convertisseur ayant les caractéristiques suivantes :

- E = 600 Volts
- $N_2$ = 4 spires
- $N_1$ = 53 spires
- fréquence de commutation = 10 kHz
- fréquence de résonance du circuit $(L_1 - C_1)$ = 8 kHz
- $L_1$ = 67 µH
- $C_1$ = 6 µH
- $C_1 = C_2$ = 47 nF
- Rapport nombre de spires $\dfrac{N_2}{N_1}$ = 8%
- Tension de sortie : 130 V
- Courant de sortie : 45 A.

Suivant une variante de l'invention (figure 4) le convertisseur fonctionne avec quatre transistors $T_1$, $T_2$, $T_3$ et $T_4$. Ces transistors sont commandés de façon à ce que les courants base $I_{B1}$ et $I_{B4}$ des transistors $T_1$ et $T_4$ soient en phase. Il en est de même pour les courants base $I_{B2}$ et $I_{B3}$ des transistors $T_2$ et $T_3$. Pour cette variante le primaire du transformateur de sortie a trois enroulements $P_{41}$, $P_{42}$ et $P_{43}$. Le circuit d'utilisation 40 comprend le secondaire du transformateur ainsi que la charge 45.

7

Pour ce montage les enroulements $P_{41}$ et $P_{43}$ correspondent à l'enroulement $P_2$ de la figure 3 et de même les inductances $L_{41}$, $L_{42}$ et $L_{43}$, $L_{44}$ correspondent aux inducteurs $L_1$ et $L_2$. On a représenté les ponts de diodes $D_{43}$, $D_{44}$ et $D_{45}$ et $D_{46}$ ayant les points milieu A et B.

Pour le montage on a représenté les éléments pour l'aide à la commutation $C_{41}$, $D_{41}$ ; $C_{42}$, $D_{42}$ ; $C_{44}$, $D_{47}$ et $C_{46}$, $D_{48}$ pour respectivement les transistors $T_1$, $T_2$, $T_3$ et $T_4$.

Dans ce montage dit, en H, la tension apparaissant crête-crête outre les points A et B est égale à deux fois la tension d'alimentation.

En conclusion on a décrit un convertisseur continu-continu avec une faible puissance mise en jeu pour les commutations des transistors, et présentant un fonctionnement des transistors indépendant des variations de la charge de sortie et donc avec un régime thermique constant.

8

## REVENDICATIONS

1. Convertisseur de tension électrique continu-continu du type demi-pont où la tension d'entrée E est appliquée à deux condensateurs en série (231,232), la commutation se faisant alternativement et séquentiellement par des transistors ($T_1$, $T_2$), un courant circulant alternativement dans le primaire d'un transformateur dont le secondaire après redressement et filtrage fournit une tension aux bornes d'une charge (25), le convertisseur comportant des circuits d'aide à la commutation, caractérisé par le fait que le primaire du transformateur est constitué de deux enroulements ($P_1$, $P_2$) connectés par leur extrémité commune aux transistors par intermédiaire d'une inductance $L_1$ en série avec un condensateur $C_1$, le point de connexion étant l'émetteur de l'un et le collecteur de l'autre, et que l'autre extrémité du premier enroulement ($P_1$) du primaire est relié au point d'entrée de tension E/2 et que l'autre extrémité du deuxième enroulement est relié à une deuxième inductance $L_2$ dont l'extrémité est reliée à la masse et au point d'entrée à la tension E par deux diodes ($D_1$, $D_2$) et que la fréquence d'accord correspondant au circuit formé par l'inductance $L_1$ et le condensateur $C_1$ est inférieure à la fréquence de commutation des transistors, et que la valeur de l'inductance $L_2$ a une valeur sensiblement égale à l'inductance de fuite de l'enroulement $P_1$ du transformateur.

2. Convertisseur de tension suivant la revendication 1 caractérisé par le fait que le nombre de spires de l'enroulement $P_2$ du transformateur est sensiblement égal à 10% du nombre de spires de l'enroulement $P_1$.

3. Convertisseur de tension suivant la revendication 1 caractérisé par le fait qu'il comporte des circuits (32) pour couper les signaux d'excitation des transistors ($T_1$, $T_2$) ou la tension d'alimentation E, le circuit de coupure (32) recevant un signal proportionnel au courant passant par l'inductance $L_1$ et le condensateur $C_1$, la commutation étant commandée quand ce courant atteint une valeur prédéterminée.

4. Convertisseur de tension suivant la revendication 1 caractérisé par le fait qu'il comporte en outre deux transistors $T_3$ et $T_4$, le transistor $T_4$ étant commandé en même temps que le transistor $T_1$ et le transistor $T_3$ en même temps que le transistor $T_2$, que le primaire du transformateur

comporte 3 enroulements ($P_{41}$, $P_{42}$, $P_{43}$), les éléments constituant les circuits étant montés de façon symétrique par rapport à l'enroulement central ($P_{42}$).

FIG.1

FIG.2

**FIG.3**

FIG.4

FIG.5

Office européen
des brevets

**RAPPORT DE RECHERCHE EUROPEENNE**

Numéro de la demande

EP   83  40  1142

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | GB-A-2 070 350  (CHLORIDE GROUP) <br> * Page 1, ligne 118 - page 2, ligne 129 * | 1 | H 02 M    3/335 |
| A | FR-A-2 001 712  (WANDEL) <br> * Figure 6 * | 1 | |
| A | DE-A-2 613 395  (SIEMENS) <br> * Pages 5-7 * | 1 | |
| A | US-A-4 199 807  (CROWE) <br> * Figure 2; colonne 2, lignes 21-45 * | 1 | |
| A | US-A-3 947 703  (SCHOLLER) <br> * Colonne 2, ligne 56 - colonne 3, ligne 2 * | 3 | **DOMAINES TECHNIQUES RECHERCHES (Int. Cl. ³)** |
| A | FR-A-2 353 991  (SIEMENS) <br> * Figure 3 * | 4 | H 02 M    3/00 <br> H 02 M    7/00 |

Le présent rapport de recherche a été établi pour toutes les revendications

| Lieu de la recherche <br> LA HAYE | Date d'achèvement de la recherche <br> 16-09-1983 | Examinateur <br> BERTIN M.H.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82